# EUROPÄISCHE PATENTSCHRIFT

(11) **EP 1 846 504 B1**
(45) Veröffentlichungstag und Bekanntmachung des Hinweises auf die Patenterteilung: **22.02.2012**
(21) Anmeldenummer: 06706319.8
(22) Anmeldetag: 20.01.2006
(51) Int. Cl.: C08L 69/00, C08K 3/26

(54) **POLYCARBONATFORMMASSEN MIT VERBESSERTER HYDROLYSEBESTAENDIGKEIT**
POLYCARBONATE MOLDING MATERIALS WITH IMPROVED HYDROLYTIC RESISTANCE
MATIERES A MOULER A BASE DE POLYCARBONATE PRESENTANT UNE RESISTANCE A L'HYDROLYSE AMELIOREE

(30) Priorität: 02.02.2005 DE 102005004688
(43) Veröffentlichungstag der Anmeldung: 24.10.2007
(73) Patentinhaber: Bayer MaterialScience AG, 51368 Leverkusen (DE)
(72) Erfinder: WENZ, Eckhard, 50679 Köln (DE); ECKEL, Thomas, 41540 Dormagen (DE); MEINCKE, Olaf, 52525 Heinsberg (DE); WARTH, Holger Flat A, 15/F., The Harbourview, The Peak Hong Kong (CN); EICHENAUER, Herbert, 41539 Dormagen (DE)
(86) Internationale Anmeldenummer: PCT/EP2006/000475
(87) Internationale Veröffentlichungsnummer: WO 2006/081949

(56) Entgegenhaltungen:
- US-A1- 2004 166 047
- US-B1- 6 831 120

## Beschreibung

Die Erfindung betrifft kautschukmodifizierte Vinylharz enthaltende, insbesondere Acrylnitiril-Butadien-Styrol-Copolymer (ABS) enthaltende Polycarbonat-Zusammensetzungen, die nanoskalige Calciumcarbonate enthalten und sich durch eine verbesserte Hydrolysebeständigkeit auszeichnen.

Polymerblends aus Polycarbonat (PC) und Acrylnitiril-Butadien-Styrol-Copolymer (ABS) sind seit langem bekannt. Aufgrund ihres Gesamteigenschaftsprofils aus hoher Wärmeformbeständigkeit, guter (Tieftemperatur-)Zähigkeit und einem gegenüber reinem Polycarbonat verbesserten Verarbeitungsverhalten eignen sich die PC-ABS-Blends besonders z.B. für Automobil-Innen- und Außenanwendungen.

Diese Blends können mit halogenbasierenden, aber insbesondere auch mit halogenfreien Flammschutzanitteln flammwidrig ausgerüstet werden. Flammwidrig ausgerüstete PC-ABS-Blends, insbesondere solche auf Basis von halogenfreien Phosphorsäureestem als Flammschutzmittel, haben sich in Elektro- und Informationstechnologie-Anwendungen in den letzten 15 Jahren etabliert.

US 6 831 120 B offenbart Zusammensetzungen enthaltend Polycarbonat, Schlagzähmodifikator (beispielsweise ABS) und feinteilige anorganische Verbindungen (beispielsweise nanopartikuläres Aluminiumoxidhydroxid) mit einem mittleren Teilchendurchmesser von ≤ 200 nm, bevorzugt ≤ 150 nm, insbesondere 1 bis 100 nm sowie 50 nm. Es werden aber keine Zusammensetzungen enthaltend nanoskaliges Calciumcarbonat offenbart.

US 2004/166047 A1 offenbart die Herstellung von nanoskaligem Calciumcarbonat und deren Einsatz in Polymeren. US 2004/166047 A1 befasst sich nicht mit der Aufgabe, schlagzähmodifizierte Polycarbonat-Zusammensetzungen bereitzustellen, die sich durch eine verbesserte Hydrolysebeständigkeit auszeichnen.

Für eine verbesserte Dauergebrauchsbeständigkeit der Materialien, insbesondere im Einsatz unter erhöhter Temperatur und Umgebungsfeuchte, ist es wünschenswert die Hydrolysebeständigkeit der Materialien zur verbessern. Unter Hydrolysebeständigkeit versteht man die zeitliche Verzögerung des Molekulargewichtsabbaus des Polycarbonates.

Dafür eignet sich der Einsatz anorganischer Calciumcarbonate wie auch unter JP-A 2002-060610 beschrieben wird. Die dort beschriebenen Verbindungen bewegen sich im Teilchengrößenbereich von 2 - 5 µm.

Auf der anderen Seite wird von den Gebrauchsteilen, die aus den Formmassen hergestellt werden, eine hohe Zähigkeit verlangt

Der Zusatz anorganischer Füllstoffe führt jedoch in der Regel zu einer Verschlechterung insbesondere der Kerbschlagzähigkeit.

Aufgabe der vorliegenden Erfindung war es somit PC-ABS-Zusanimensetzungen bereitzustellen, die sich unter Beibehaltung einer hohen Zähigkeit durch verbesserte Hydrolysebeständigkeit auszeichnen.

Überraschend wurde nun gefunden, dass sich durch Zusatz von sehr feinteiligen Calciumcarbonaten mit einem mittleren Teilchendurchmesser von weniger als 100 nm die Hydrolysebeständigkeit stark verbessern lässt, ohne dass sich die Zähigkeit des Blends verschlechtert.

Gegenstand der vorliegenden Erfindung sind demnach Zusammensetzungen enthaltend
A) aromatisches Polycarbonat oder aromatisches Polyestercarbonat oder Mischungen hieraus,
B) kautschukmodifizierte Vinyl(co)polymerisate,
C) Calciumcarbonate mit einem mittleren Teilchendurchmesser von weniger als 100 nm und gegebenenfalls
D) Phosphorbasierende Flammschutzmittel,
E) Antitropfmittel,
F) Polymeradditive und/oder weitere, Polymerkomponenten.
Insbesondere betrifft diese Erfindung Zusammensetzungen enthaltend
A) 20 bis 98 Gew.-Teile, bevorzugt 30 bis 95 Gew.-Teile, insbesondere 40 bis 90 Gew.-Teile aromatisches Polycarbonat und/oder aromatisches Polyestercarbonat,
B) 1 bis 79,99 Gew.-Teile, bevorzugt 2 bis 70 Gew.-Teile, insbesondere 3 bis 50, ganz besonders bevorzugt 3 bis 40 Gew.-Teile kauschukmodifiziertes Vinyl(co)polymerisat,
C) 0,01 bis 5 Gew.-Teile, bevorzugt 0,02 bis 2 Gew.-Teile, insbesondere 0,05 bis 1 Gew.-Teile Calciumcarbonat mit einem mit einem mittleren Teilchendurchmesser von weniger als 100 nm.
   und gegebenenfalls
D) 1 bis 30 Gew.-Teile, bevorzugt 2 bis 25 Gew.-Teile, insbesondere 2 bis 20 Gew.-Teile einer Phosphorverbindung als Flammschutzmittel,
E) 0 bis 1 Gew.-Teil, bevorzugt 0,1 bis 0,5 Gew.-Teile, insbesondere 0,2 bis 0,5 Gew.-Teile eines Antitropfmittels, bevorzugt eines fluorierten Polyolefins und
F) bis zu 20 Gew.-Teile, bevorzugt bis zu 15 Gew.-Teile, insbesondere bis zu 10 Gew.-Teile Polymeradditive oder weitere Polymerkomponenten,
wobei die Gew.-Teile aller Komponenten so normiert sind, dass die Summe aller Gew.-Teile 100 ergibt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z.B. durch Schmelzeverfahren oder durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 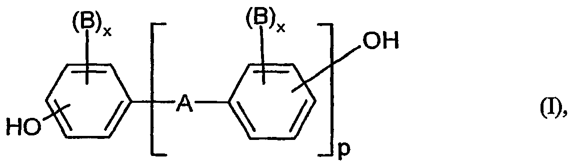 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂ -Arylen, an das weitere aromatische gegebenenfalls Heteroatome enthaltende Ringe kondensiert sein können,
oder ein Rest der Formel (II) oder (III) 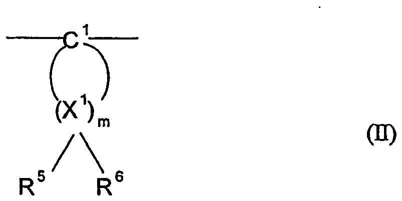 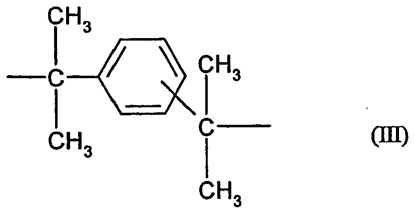
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenolen sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mole Diphenole und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxyl-methan, 1,4-Bis(4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzte werden.

### Komponente B

Die Komponente B umfasst Pfropfpolymerisate B1 von mindestens einem Vinylmonomeren auf mindestens einen Kautschuk mit einer Glasübergangstemperatur weniger als 10°C als Pfropfgrundlage.

Bevorzugte Pfropfpolymerisate B1 sind ein oder mehrere Pfropfpolymerisate von
5 bis 95 Gew.%, vorzugsweise 10 bis 90 Gew.%, Monomeren einer Mischung aus
1. 50 bis 99 Gew.-%, insbesondere 50 bis 90, noch bevorzugter 55 bis 85, ganz besonders bevorzugt 60 bis 80 Gew.% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
2. 1 bis 50 Gew.%, insbesondere 10 bis 50, noch bevorzugter 15 bis 45, ganz besonders bevorzugt 20 bis 40 Gew.-% Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid) auf
   95 bis 5, vorzugsweise 80 bis 10 Gew.% einen oder mehrere Kautschuke mit Glasübergangstemperaturen weniger als 10°C, vorzugsweise weniger als0°C, besonders bevorzugt weniger als -20°C als Pfropfgrundlage.

Die Pfropfgrundlage hat im allgemeinen eine mittlere Teilchengröße (d₅₀-Wert) von 0,05 bis 10 µm, vorzugsweise 0,1 bis 5 µm, besonders bevorzugt 0,2 bis 2 µm.

Die mittlere Teilchengröße d₅₀ ist der Durchmesser, oberhalb und unterhalb dessen jeweils 50 Gew% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere der Gruppe 1 sind ausgewählt aus mindestens einem der Monomere Styrol, α-Methylstyrol und Methylmethacrylat, bevorzugte Monomere der Gruppe 2 sind ausgewählt aus mindestens einem der Monomere Acrylnitril, Maleinsäureanhydrid und Methylmethacrylat.

Besonders bevorzugte Monomere sind Styrol aus Gruppe 1 und Acrylnitril aus Gruppe 2.

Für die Pfropfpolymerisate B1 geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke sowie Kompositkautschuke, bestehend aus zwei oder mehr der zuvor genannten Systeme, z.B. Silikon-Acrylatkautschuke.

Dienkautschuke im Sinne der vorliegenden Erfindung sind solche z.B. auf Basis Butadien, Isopren etc. oder Gemische von Dienkautschuken oder Copolymerisate von Dienkautschuken oder deren Gemischen mit weiteren copolymerisierbaren Monomeren (z.B. gemäß oben aufgeführter Gruppen 1 und 2), wie beispielsweise Butadien/Styrol-Copolymerisate, mit der Maßgabe, dass die Glasübergangstemperatur der Pfropfgrundlage weniger als10°C, vorzugsweise weniger als0°C, besonders bevorzugt weniger als-10°C liegt.

Besonders bevorzugt ist reiner Polybutadienkautschuk.

Besonders bevorzugte Pfropfpolymerisate B1 sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage beträgt mindestens 30 Gew.%, vorzugsweise mindestens 40 Gew.%.

Der Gelgehalt der Pfropfgrundlage wird bei 25°C in Toluol bestimmt (M. Hoffmann, H. Krömer, R Kuhn, Polymeranalytik I und II, Georg Thieme-Verlag, Stuttgart 1977).

Die Pfropfcopolymerisate B1 werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisat auch solche Produkte verstanden, die durch (Co)Polymerisation der Pfropfmonomere in Gegenwart der Pfropfgrundlage gewonnen werden und bei der Aufarbeitung mit anfallen.

Als Pfropfgrundlage geeignete Acrylatkautschuke sind vorzugsweise Polymerisate aus Acrylsäurealkylestern, gegebenenfalls auch Copolymerisate mit bis zu 40 Gew.%, bezogen auf die Pfropfgrundlage anderen polymerisierbaren, ethylenisch ungesättigten Monomeren. Zu den bevorzugten polymerisierbaren Acrylsäureestern gehören C₁-C₈Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage.

Bei cyclischen vernetzenden Monomeren mit mindestens drei ethylenisch ungesättigten Gruppen ist es vorteilhaft, die Menge auf unter 1 Gew.-% der Pfropfgrundlage zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE-A 3 704 657, DE-A 3 704 655, DE-A 3 631 540 und DE-A 3 631 539 beschrieben werden.

Komponente B kann weiterhin ein oder mehrere thermoplastische Vinyl(Co)Polymerisate B2 enthalten, in der die o.g. Pfropfpolymerisate B1 in der erfindungsgemäßen Zusammensetzung bevorzugt dispergiert vorliegen.

Geeignet sind als Vinyl(Co)Polymerisate B2 Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
50 bis 99, vorzugsweise 60 bis 80 Gew.% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
1 bis 50, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate B2 sind harzartig und thermoplastisch.

Besonders bevorzugt ist das Copolymerisat aus Styrol und Acrylnitril.

Die (Co)Polymerisate gemäß B2 sind bekannt und lassen sich durch radikalische Polymerisation, insbesondere durch Emulsions-, Suspensions-, Lösung- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000, insbesondere zwischen 50.000 und 180.000.

### Komponente C

Als Komponente C werden Calciumcarbonate mit einer mittleren Teilchengröße von weniger als 100 nm, vorzugsweise weniger als 90 nm, besonders bevorzugt weniger als 50 nm verwendet. Die mittlere Teilchengröße ist dabei prinzipiell nicht nach unten beschränkt, beträgt aber üblicherweise mehr als 6 nm.

Die mittlere Teilchengröße bezieht sich auf die Primärteilchengröße bestimmbar nach unterschiedlichen Methoden. Die Teilchengröße der eingesetzten Calciumcarbonate wird nicht nach Compoundierung im Polymerblend bestimmt, sondern direkt nach der Herstellung entweder als Dispersion oder als Pulver. Die mittlere Teilchengröße kann mit verschiedenen gängigen Methoden bestimmt werden, wie z.B. Transmissions- oder Rasterelektronenmikroskopie, Ultrazentrifugation, Lichtstreumethoden, Adsorptionsmessungen oder Luftdurchlässigkeit.

Die Reinheit der Calciumcarbonate liegt üblicherweise bei mindestens 95 %, vorzugsweise bei über 97 %.

### Komponente D

Phosphorhaltige Flammschutzmittel im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV) 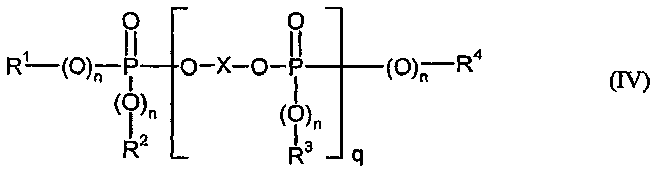 worin
- R¹, R², R³ und R⁴,: unabhängig voneinander jeweils gegebenenfalls halogeniertes C₁- bis C₈-Alkyl, jeweils gegebenenfalls durch Alkyl, vorzugsweise C₁-C₄-Alkyl, und/oder Halogen, vorzugsweise Chlor, Brom, substituiertes C₅- bis C₆-Cycloalkyl, C₆- bis C₂₀-Aryl oder C₇- bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30. Bei Einsatz von Mischungen verschiedener Komponenten der Formel (IV) können Mischungen vorzugsweise zahlen-gemittelte q-Werte von 0,3 bis 20, besonders bevorzugt 0,5 bis 10, insbesondere 0,5 bis 6 verwendet werden.
- X: steht besonders bevorzugt für 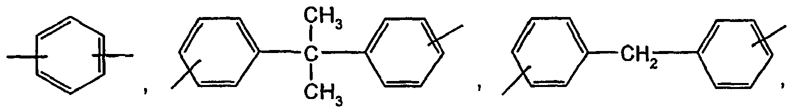 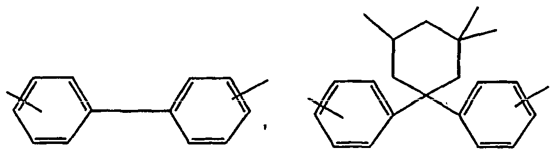
oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestern der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren lässt sich mit diesen Flammschutzmitteln eine besonders hohe Wärmeformbeständigkeit erzielen.

Als erfindungsgemäße Komponente C können Monophosphate (q=0), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Komponente C. Formel (IV) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

A_{3-y}NB¹_{y} (V)

in welcher

A für einen Rest der Formel (Va) 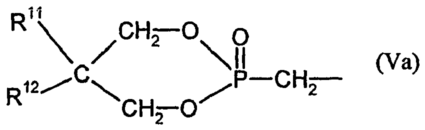 oder (Vb) 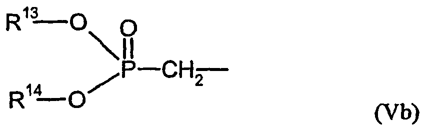 steht,
- R¹¹ und R¹²: unabhängig voneinander für unsubstituiertes oder substituiertes C₁-C₁₀-Alkyl oder für unsubstituiertes oder substituiertes C₆-C₁₀-Aryl, stehen,
- R¹³ und R¹⁴: unabhängig voneinander für unsubstituiertes oder substituiertes C₁-C₁₀-Alkyl oder unsubstituiertes oder substituiertes C₆-C₁₀-Aryl stehen oder
- R¹³ und R¹⁴: zusammen für unsubstituiertes oder substituiertes C₃-C₁₀-Alkylen stehen,
- y: die Zahlenwerte 0, 1 oder 2 bedeuten und
- B¹: unabhängig für Wasserstoff, gegebenenfalls halogeniertes C₂-C₈-Alkyl, unsubstituiertes oder substituiertes C₆-C₁₀-Aryl steht.
- B¹: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹¹, R¹², R¹³ und R¹⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

C₆-C₁₀-Aryl steht in R¹¹, R¹², R¹³ und R¹⁴ unabhängig vorzugsweise für Phenyl, Naphthyl oder Binaphthyl, insbesondere o-Phenyl, o-Naphthyl, o-Binaphthyl, welche durch Halogen (im Allgemeinen ein-, zwei- oder dreifach) substituiert sein können.

R¹³ und R¹⁴ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2"-trioxid der Formel (Va-1)

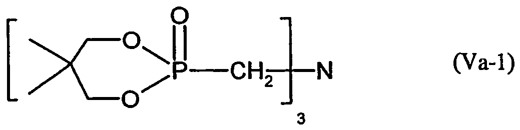

### (Versuchsprodukt XPM 1000 Fa. Solutia Inc., St. Louis, USA)

1,3,2-Dioxaphosphorinan-2-methanamin, N-butyl-N[(5,5-dimethyl-1,3,2-dioxaphosphorinan-2-yl)-methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

### Bevorzugt sind weiterhin:

### Verbindungen der Formel (Va-2) oder (Va-3)

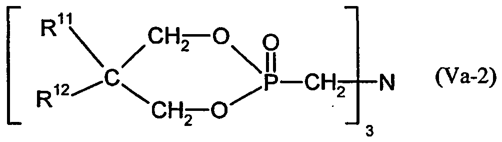

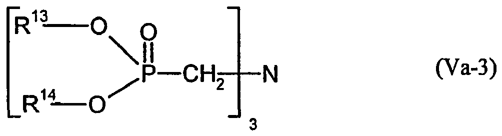

wobei

R¹¹, R¹², R¹³ und R¹⁴ die oben angegebenen Bedeutungen haben.

Besonders bevorzugt sind Verbindungen der Formel (Va-2) und (Va-1).

Die Herstellung der Phosphonatamine ist beispielsweise in US-Patentschrift 5,844,028 beschrieben.

### Phosphazene sind Verbindungen der Formeln (VIa) und (VIb)

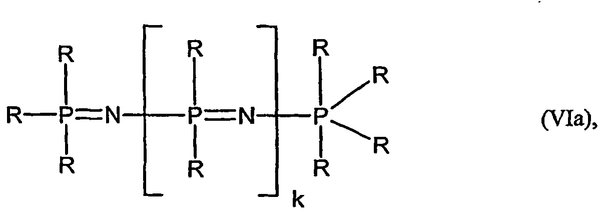

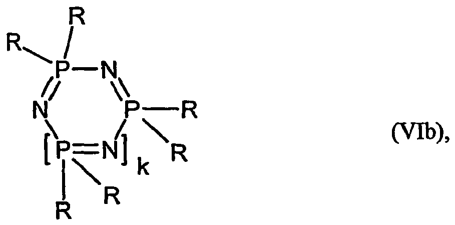

worin
- R: jeweils gleich oder verschieden ist und für Amino, jeweils gegebenenfalls halogeniertes, vorzugsweise mit Fluor halogeniertes C₁- bis C₈-Alkyl, oder C₁- bis C₈- Alkoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, C₆- bis C₂₀-Aryl, vorzugsweise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

### Beispielhaft seien genannt:

Propoxyphosphazen, Phenoxyphosphazen, Methylphenoxyphosphazen, Aminophosphazen und Fluoralkylphosphazene.

Bevorzugt ist Phenoacyphosphazen.

Die Phosphazene können allein oder als Mischung eingesetzt werden. Der Rest R kann immer gleich sein oder 2 oder mehr Reste in den Formeln (VIa) und (VIb) können verschieden sein.

Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

### Komponente E

Die Flammschutzmittel entsprechend Komponente D werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B1) oder mit einer Emulsion eines Copolymerisats, vorzugsweise auf Styrol/Acrylnitril- oder PMMA-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B1) oder einem Copolymerisat, vorzugsweise auf Styrol/Acrylnitril- oder PMMA-Basis, eingesetzt werden. Die fluorierten Polyolefine werden als Pulver mit einem Pulver oder Granulat des Pfropfpolymerisats oder Copolymerisats vermischt und in der Schmelze im Allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethycrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.%.

Die fluorierten Polyolefine kommen in Konzentrationen von 0 bis 1 Gew.-Teilen, bevorzugt von 0,1 bis 0,5 Gew.-Teilen, insbesondere 0,2 bis 0,5 Gew.-Teilen zum Einsatz, wobei sich diese Mengenangaben bei Einsatz eines Koagulats, Präcompounds oder Masterbatches auf das reine fluorierte Polyolefin beziehen.

### Komponente F (Weitere Zusätze)

Die erfindungsgemäßen Zusammensetzungen können weiterhin wenigstens ein übliches Polymeradditiv wie ein Gleit- oder Entformungsmittel, beispielsweise Pentaerythrittetrastearat, ein Nukleiermittel, ein Antistatikum, einen Stabilisator, einen Füll- oder Verstärkungsstoff, z.B. ein Silikat wie Talk oder Wollastonit, ein weiteres Flammschutzmittel oder einen Flammschutzsynergisten wie beispielsweise ein nanoskaliges anorganisches Material sowie einen Farbstoff oder ein Pigment enthalten.

Des weiteren können die erfindungsgemäßen Zusammensetzungen weitere Polymerkomponenten wie beispielsweise Polyphenylenoxide, Polyester, Epoxyharze oder Novolake enthalten.

Alle Gewichtsteil-Angaben in dieser Anmeldung sind so normiert, dass die Summe der Gewichtsteile aller Komponenten in der Zusammensetzung 100 ergibt.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Gegenstand der Erfindung ist daher weiterhin ein Verfahren zur Herstellung der Zusammensetzungen, deren Verwendung zur Herstellung von Formteilen sowie die Formteile selbst.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:

Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür. Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte, Sicherheitsteile im Automobilinnenraum.

Die folgenden Beispiele dienen der weiteren Erläuterung der Erfindung.

### Beispiele

Die in der Tabelle 1 angegebenen und nachfolgend kurz erläuterten Komponenten wurden auf einer ZSK-25 bei 260°C schmelzcompoundiert. Die Prüfkörper wurden auf einer Spritzgießmaschine Typ Arburg 270 E bei 260°C hergestellt.

### Komponente A

Lineares Polycarbonat auf Basis Bisphenol A mit einer relativen Lösungsviskosität von 1,294 gemessen in CH₂Cl₂ als Lösungsmittel bei 25°C und in einer Konzentration von 0,5 g/100 ml.

### Komponente B

Als ABS-Komponente wurde ein Propfcopolymerisat hergestellt im Masseverfahren bestehend aus Polybutadien (13 %), Polystyrol (67 %) und Polyacrylnitril (20 %) der Fima Nippon A&L (Handelsname: Santac 08) verwendet.

### Komponente C

C1: Calciumcarbonat (Vergleich gemäß JP A 2002-060610) mit einem mittleren Teilchendurchmesser von 5 µm (Shipron A, Fa. Shipro Kasei)
C2: Calciumcarbonat mit einem mittleren Teilchendurchmesser von 80 nm und einem organischen Coating-Anteil von 2 Gew % (Socal U1S1, Fa. Solvay)
C3: Calciumcarbonat mit einem mittleren Teilchendurchmesser von 80 nm.
   (Socal U1, Fa. Solvay)
C4: Calciumcarbonat mit einem mittleren Teilchendurchmesser von 20 nm. (Socal U3, Fa. Solvay)

### Komponente D

### Bisphenol-A basierendes Oligophosphat

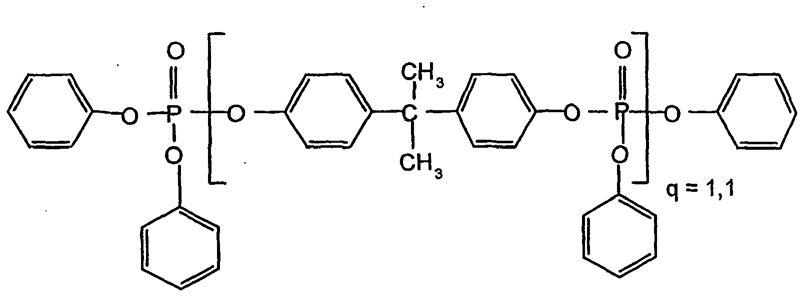

### Komponente E

Tetrafluorethylenpolymerisat als koagulierte Mischung aus einer Pfropfpolymerisat-Emulsion gemäß oben genannter Komponente B1 in Wasser und einer Tetrafluorethylenpolymerisat-Emulsion in Wasser. Das Gewichtsverhältnis Pfropfpolymerisat B1 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.%; der mittlere Teilchendurchmesser liegt zwischen 0,05 und 0,5 µm. Die Pfropfpolymerisat-Emulsion besitzt einen Feststoffgehalt von 34 Gew.-%.

Die Emulsion des Tetrafluorethylenpolymerisats (Teflon® 30 N von DuPont) wird mit der Emulsion des Pfropfpolymerisats B1 vermischt und mit 1,8 Gew.%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolyt&eiheit gewaschen, anschließend durch Zentrifugation von der Hauptmenge Wasser befreit und danach bei 100°C zu einem Pulver getrocknet.

### Komponente F1

### Pentaerithrithtetrastearat (PETS) als Entformungsmittel

### Komponente F2

### Phosphitstabilisator

### Untersuchung der Eigenschaften der erfindungsgemäßen Formmassen

Die Bestimmung der Kerbschlagzähigkeit erfolgt bei Raumtemperatur gemäß ISO 180/1A an Stäben mit der Abmessung 80 mm x 10 mm x 4 mm.

Die Bestimmung der Schmelzefließfähigkeit (MVR = Melt Viscosity Range) erfolgte nach ISO 1133 bei 240°C Schmelzetemperatur und 5 kg Auflagegewicht.

Die Besimmung des hydrolytischen Abaus erfolgte durch eine 14tägige Lagerung der Granulate bei 95°C und 100 % Luftfeuchtigkeit. Als Maß für den hydrolytischen Abbau des Polycarbonates wird die Erhöhung der Schmelzefließfähigkeit in % berechnet.

Eine Zusammenstellung der Eigenschaften der erfindungsgemäßen Zusammensetzung bzw. daraus erhaltener Prüfkörper ist in der Tabelle 1 wiedergegeben.

Aus Tabelle 1 wird ersichtlich, das die erfindungsgemäßen nanoskaligen Calciumcarbonate ein wesentlich höhere Effizienz als Hydrolysestabilisatoren aufweisen. V1 zeigt, dass im Fall einer Einsatzmene von 1 % des grobteiligen Calciumcarbonats eine gewisse Hydrolysestabilisierung gefunden werden kann, allerdings die Kerbschlagzähigkeit deutlich niedriger als das Vergleichsbeispiel ohne Hydrolysestabilisator V0 liegt. Im Fall einer Einsatzmenge von 0,05 % beobachtet man eine nur sehr unzureichende Hydrolysestabilisierung, wobei hier aufgrund der niedrigen Einsatzmenge eine nur geringe Absenkung der Kerbschlagzähigkeit zu beobachten ist. Im Fall der nanoskaligen erfindungsgemäßen Calciumcarbonate (E1-6) beobachtet man im Rahmen der Fehlerbreite keinerlei Beeinträchtigung der Zähigkeit bei 0,05 % - 1 % Einsatzmenge. Die Effizienz der nanoskaligen Calciumcarbonate als Hydrolysestabilisator ist in allen Fällen höher als das Vergleichsmaterial mit 5 µm Teilchengröße. Insbesondere Komponente C3 mit der kleinsten Teilchengröße von 20 nm zeigt das beste Hydrolyseverhalten unter Beibehaltung der Kerbschlagzähigkeit.

**Tabelle 1**

| | | V0 | V1 | V2 | E1 | E2 | E3 | E4 | E5 | E6 |
|---|---|---|---|---|---|---|---|---|---|---|
| **Komponenten [Gew.-Teile]** | | | | | | | | | | |
| A | (PC) | 69.80 | 68.80 | 69.75 | 68.80 | 68.80 | 68.80 | 69.75 | 69.75 | 69.75 |
| B | (Masse-ABS) | 15.80 | 15.80 | 15.80 | 15.80 | 15.80 | 15.80 | 15.80 | 15.80 | 15.80 |
| C1 | (Calciumcarbonat) | | 1.00 | 0.05 | | | | | | |
| C2 | (Calciumcarbonat) | | | | 1.00 | | | 0.05 | | |
| C3 | (Calciumcarbonat) | | | | | 1.00 | | | 0.05 | |
| C4 | (Calciumcarbonat) | | | | | | 1.00 | | | 0.05 |
| D | (BDP) | 12.90 | 12.90 | 12.90 | 12.90 | 12.90 | 12.90 | 12.90 | 12.90 | 12.90 |
| E | (PTFE-Masterbatch) | 0.80 | 0.80 | 0.80 | 0.80 | 0.80 | 0.80 | 0.80 | 0.80 | 0.80 |
| F1 | (PETS) | 0.40 | 0.40 | 0.40 | 0.40 | 0.40 | 0.40 | 0.40 | 0.40 | 0.40 |
| F2 | (Stabilisator) | 0.30 | 0.30 | 0.30 | 0.30 | 0.30 | 0.30 | 0.30 | 0.30 | 0.30 |

| **Eigenschaften** | | | | | | | | | | |
|---|---|---|---|---|---|---|---|---|---|---|
| aₖ (kJ/m²) | | 10.6 | 7.7 | 10.1 | 10.0 | 11.1 | 10.5 | 9,8 | 11.3 | 11.2 |
| MVR Änderung nach 72h (%) | | 136.2 | 41.7 | 116.3 | 21.2 | 18.5 | 10.7 | 55.3 | 50.8 | 38.6 |
| MVR Änderung nach 144h (%) | | 775.1 | 120.4 | 613.9 | 37.5 | 31.3 | 18.8 | 163.4 | 164.4 | 81.8 |
| MVR Änderung nach 192h (%) | | n.b.* | 267.8 | n.b.* | 48.1 | 45.8 | 31.0 | 546.6 | 469.3 | 165.8 |
| MVR Änderung nach 264h (%) | | n.b.* | 435.4 | n.b.* | 65.4 | 61.4 | 39.8 | n.b.* | n.b.* | 211.9 |
| MVR Änderung nach 336h (%) | | n.b.* | n.b.* | n.b.* | 86.9 | 81.6 | 55.3 | n.b.* | n.b.* | 276.6 |

| | | | | | | | | | | |
|---|---|---|---|---|---|---|---|---|---|---|
| *n.b. - Wert nicht bestimmbar, Material zu niedrigviskos | | | | | | | | | | |

## Patentansprüche

1. Zusammensetzungen enthaltend
A) aromatisches Polycarbonat oder aromatisches Polyestercarbonat oder Mischungen hieraus,
B) kautschukmodifizierte Vinyl(co)polymerisate,
C) Calciumcarbonate mit einem mittleren Teilchendurchmesser von weniger als 100 nm

2. Zusammensetzungen gemäß Anspruch 1 enthaltend zusätzlich mindestens eine weitere Komponente ausgewählt aus
D) Phosphorbasierende Flammschutzmittel,
E) Antitropfmittel,
F) Polymeradditive und/oder weitere Polymerkomponenten.

3. Zusammensetzungen gemäß Anspruch 1 oder 2 enthaltend
A) 20 bis 98 Gew.-Teile aromatisches Polycarbonat und/oder aromatisches Polyestercarbonat,
B) 1 bis 80 Gew.-Teile kauschukmodifiziertes Vinyl-(co)polymerisat,
C) 0,01 bis 5 Gew.-Teile Calciumcarbonat mit einem mit einem mittleren Teilchendurchmesser von weniger als 100 nm.
wobei die Summe aller Gew.-Teile 100 ergibt.

4. Zusammensetzungen gemäß Anspruch 3 enthaltend zusätzlich
D) 1 bis 30 Gew.-Teile einer Phosphorverbindung als Flammschutzmittel, wobei die Gew.-Teile aller Komponenten so normiert sind, dass die Summe aller Gew.-Tle. 100 ergibt.

5. Zusammensetzungen gemäß Anspruch 3 oder 4 enthaltend zusätzlich
E) bis 1 Gew.-Teil eines Antitropfmittels, bevorzugt eines fluorierten Polyolefins*,* wobei die Gew.-Tle. aller Komponenten so normiert sind, dass die Summe aller Gew.-Tle. 100 ergibt.

6. Zusammensetzungen gemäß einem der Ansprüche 3 bis 5 enthaltend zusätzlich
F) bis zu 20 Gew.-Teile Polymeradditive oder weitere Polymerkomponenten, wobei die Gew.-Tle. aller Komponenten so normiert sind, dass die Summe aller Gew.-Tle. 100 ergibt.

7. Zusammensetzungen gemäß Anspruch 3 enthaltend
A) 40 bis 90 Gew.-Teile aromatisches Polycarbonat und/oder aromatisches Polyestercarbonat,
B) 3 bis 40 Gew.-Teile kauschukmodifiziertes Vinyl(co)polymerisat,
C) 0,05 bis 1 Gew.-Teile Calciumcarbonat mit einem mit einem mittleren Teilchendurchmesser von weniger als 100 nm.
wobei die Gew.-Teile aller Komponenten so normiert sind, dass die Summe aller Gew.-Tle. 100 ergibt.

8. Zusammensetzungen gemäß Anspruch 4 enthaltend
D) 2 bis 20 Gew.-Teile einer Phosphorverbindung als Flammschutzmittel, wobei die Gew.-Teile aller Komponenten so normiert sind, dass die Summe aller Gew.-Tle. 100 ergibt.

9. Zusammensetzungen gemäß Anspruch 5 enthaltend
E) 0,1 bis 0,5 Gew.-Teile eines eines fluorierten Polyolefins,
wobei die Gew.-Teile aller Komponenten so normiert sind, dass die Summe aller Gew.-Tle. 100 ergibt.

10. Zusammensetzungen gemäß Anspruch 6 enthaltend
F) bis zu 10 Gew.-Teile Polymeradditive oder weitere Polymerkomponenten, wobei die Gew.-Teile aller Komponenten so normiert sind, dass die Summe aller Gew.-Tle. 100 ergibt.

11. Verfahren zur Herstellung von Zusammensetzungen gemäß einem der Ansprüche 1 bis 10 durch Vermischen der Bestandteile und Schmelzcompoundieren bei Temperaturen von 200°C bis 300°C.

12. Verwendung von Zusammensetzungen gemäß einem der Ansprüche 1 bis 10 zur Herstellung von Formteilen.

13. Formteile erhältlich aus Zusammensetzungen gemäß einem der Ansprüche 1 bis 10.

14. Formteile gemäß Anspruch 13 ausgewählt aus Innenausbauteilen für Schienenfahrzeuge, Schiffe, Flugzeuge, Busse und Automobile, Radkappen, Gehäusen von Kleintransformatoren enthaltenden Elektrogeräten, Gehäusen für Geräte zur Informationsverbreitung und Übermittlung, Gehäusen und Verkleidungen für medizinische Zwecke, Massagegeräten und Gehäusen dafür, Spielfahrzeugen für Kinder, Flächigen Wandelementen, Gehäusen für Sicherheitseinrichtungen, Heckspoilern, Karosserieteilen für KFZ, Wärmeisolierten Transportbehältnissen, Vorrichtungen zur Haltung oder Versorgung von Kleintieren, Formteilen für Sanitär- und Badausrüstungen, Abdeckgittern für Lüfteröffnungen, Formteilen für Garten- und Gerätehäuser, Gehäusen für Gartengeräte und Sicherheitsteilen im Automobilinnenraum.

## Claims

1. Compositions containing
A) aromatic polycarbonate or aromatic polyester carbonate or mixtures thereof,
B) rubber-modified vinyl (co)polymers,
C) calcium carbonates having an average particle diameter of less than 100 nm.

2. Compositions according to Claim 1 containing additionally at least one further component selected from
D) phosphorus-based flame retardants,
E) antidripping agents,
F) polymer additives and/or further polymer components.

3. Compositions according to Claim 1 or 2 containing
A) 20 to 98 parts by weight of aromatic polycarbonate and/or aromatic polyester carbonate,
B) 1 to 80 parts by weight of rubber-modified vinyl (co)polymer,
C) 0.01 to 5 parts by weight of calcium carbonate having an average particle diameter of less than 100 nm,
wherein the total of all parts by weight amounts to 100.

4. Compositions according to Claim 3 containing additionally
D) 1 to 30 parts by weight of a phosphorus compound as flame retardant, wherein the parts by weight of all the components are standardized such that the total of all parts by weight amounts to 100.

5. Compositions according to Claim 3 or 4 containing additionally
E) up to 1 part by weight of an antidripping agent, preferably a fluorinated polyolefin, wherein the parts by weight of all the components are standardized such that the total of all parts by weight amounts to 100.

6. Compositions according to any one of Claims 3 to 5 containing additionally
F) up to 20 parts by weight of polymer additives or further polymer components, wherein the parts by weight of all the components are standardized such that the total of all parts by weight amounts to 100.

7. Compositions according to Claim 3 containing
A) 40 to 90 parts by weight of aromatic polycarbonate and/or aromatic polyester carbonate,
B) 3 to 40 parts by weight of rubber-modified vinyl (co)polymer,
C) 0.05 to 1 part by weight of calcium carbonate having an average particle diameter of less than 100 nm,
wherein the parts by weight of all the components are standardized such that the total of all parts by weight amounts to 100.

8. Compositions according to Claim 4 containing
D) 2 to 20 parts by weight of a phosphorus compound as a flame retardant,
wherein the parts by weight of all the components are standardized such that the total of all parts by weight amounts to 100.

9. Compositions according to Claim 5 containing
E) 0.1 to 0.5 part by weight of a fluorinated polyolefin,
wherein the parts by weight of all the components are standardized such that the total of all parts by weight amounts to 100.

10. Compositions according to Claim 6 containing
F) up to 10 parts by weight of polymer additives or further polymer components,
wherein the parts by weight of all the components are standardized such that the total of all parts by weight amounts to 100.

11. Process for production of compositions according to any one of Claims 1 to 10 by mixing the constituents and melt compounding at temperatures of 200°C to 300°C.

12. Use of compositions according to any one of Claims 1 to 10 for production of mouldings.

13. Mouldings obtainable from compositions according to any one of Claims 1 to 10.

14. Mouldings according to Claim 13 selected from interior fittings for rail vehicles, ships, aircraft, buses and cars, hubcaps, casings for electrical appliances containing miniature transformers, casings for equipment for broadcasting and transmitting information, casings and coverings for medical purposes, massagers and casings therefor, toy vehicles for children, large-area wall elements, casings for safety apparatus, tailgate spoilers, car body parts, thermally insulated transport containers, devices for keeping or caring for small animals, mouldings for sanitary and bathroom fittings, cover gratings for fan openings, mouldings for summerhouses and sheds, casings for garden tools and safety components for inside cars.

## Revendications

1. Composition contenant
A) un polycarbonate aromatique ou un polyestercarbonate aromatique ou des mélanges de ceux-ci,
B) des (co)polymérisats vinyliques modifiés avec du caoutchouc,
C) des carbonates de calcium ayant un diamètre moyen de particule de moins de 100 nm.

2. Compositions selon la revendication 1, contenant en outre au moins un autre composant choisi parmi
D) des agents ignifuges à base de phosphore,
E) des agents anticoulure,
F). des additifs polymères et/ou d'autres composants polymères.

3. Compositions selon la revendication 1 ou 2, contenant
A) 20 à 98 parties en poids de polycarbonate aromatique et/ou polyestercarbonate aromatique,
B) 1 à 80 parties en poids de (co)polymérisat vinylique modifié avec du caoutchouc,
C) 0,01 à 5 parties en poids de carbonate de calcium ayant un diamètre moyen de particule de moins de 100 nm,
la somme de toutes les parties en poids étant égale à 100.

4. Compositions selon la revendication 3, contenant en outre
D) 1 à 30 parties en poids d'un composé phosphoré en tant qu'agent ignifuge, les parties en poids de tous les composants étant normalisées de manière que la somme de toutes les parties en poids soit égale à 100.

5. Compositions selon la revendication 3 ou 4, contenant en outre
E) jusqu'à 1 partie en poids d'un agent anticoulure, de préférence d'une polyoléfine fluorée, les parties en poids de tous les composants étant normalisées de manière que la somme de toutes les parties en poids soit égale à 100.

6. Compositions selon l'une quelconque des revendications 3 à 5, contenant en outre
F) jusqu'à 20 parties en poids d'additifs polymères ou d'autres composants polymères, les parties en poids de tous les composants étant normalisées de manière que la somme de toutes les parties en poids soit égale à 100.

7. Compositions selon la revendication 3, contenant
A) 40 à 90 parties en poids de polycarbonate aromatique et/ou polyestercarbonate aromatique,
B) 3 à 40 parties en poids de (co)polymérisat vinylique modifiés avec du caoutchouc,
C) 0,05 à 1 partie en poids de carbonate de calcium ayant un diamètre moyen de particule de moins de 100 nm,
les parties en poids de tous les composants étant normalisées de manière que la somme de toutes les parties en poids soit égale à 100.

8. Compositions selon la revendication 4, contenant
D) 2 à 20 parties en poids d'un composé en tant qu'agent ignifuge,
les parties en poids de tous les composants étant normalisées de manière que la somme de toutes les parties en poids soit égale à 100.

9. Compositions selon la revendication 5, contenant
E) 0,1 à 0,5 partie en poids d'une polyoléfine fluorée,
les parties en poids de tous les composants étant normalisées de manière que la somme de toutes les parties en poids soit égale à 100.

10. Compositions selon la revendication 6, contenant
F) jusqu'à 10 parties en poids d'additifs polymères ou d'autres composants polymères,
les parties en poids de tous les composants étant normalisées de manière que la somme de toutes les parties en poids soit égale à 100.

11. Procédé pour la préparation de compositions selon l'une quelconque des revendications 1 à 10, par mélange des composants et compoundage en masse fondue, à des températures de 200°C à 300°C.

12. Utilisation des compositions selon l'une quelconque des revendications 1 à 10, pour la production de pièces moulées.

13. Pièces moulées pouvant être obtenues à partir des compositions selon l'une quelconque des revendications 1 à 10.

14. Pièces moulées selon la revendication 13, choisies parmi des éléments de construction intérieurs pour véhicules sur rails, bateaux, aéronefs, autobus/autocars et automobiles, des enjoliveurs, des boîtiers d'appareils électriques contenant de petits transformateurs, des boîtiers pour appareils destinés à la diffusion er la transmission de données, des boîtiers et habillages à fins médicales, des appareils de massage et des carters pour ceux-ci, des véhicules jouets pour enfants, des panneaux préfabriqués, des boîtiers pour dispositifs de sécurité, des béquets, des pièces de carrosserie pour automobiles, des conteneurs calorifugés, des dispositifs pour l'entretien et le soin de petits animaux, des pièces moulées pour équipements sanitaires et de bain, des plaques grillagées pour entrées d'arrivée d'air, des pièces moulées pour abris de jardin et d'appareils, des carters pour outils de jardinage et des éléments de sécurité dans l'habitacle d'automobiles.
